# EUROPÄISCHE PATENTANMELDUNG

(11) **EP 2 700 572 A1**
(43) Veröffentlichungstag der Anmeldung: **26.02.2014**
(21) Anmeldenummer: 12181553.4
(22) Anmeldetag: 23.08.2012
(51) Int. Cl.: B63G 8/08, B01D 53/04, C01B 3/00, H01M 8/00

(54) **Betriebsgassystem für ein Unterwasserfahrzeug, Verfahren zum Betrieb eines solchen Betriebsgassystems sowie ein Unterwasserfahrzeug mit einem solchen Betriebsgassystem**

(71) Anmelder: Siemens Aktiengesellschaft, 80333 München (DE)
(72) Erfinder: Hoffmann, Joachim, 90559 Burgthann (DE)

(57) **Zusammenfassung**

Die Erfindung betrifft ein Betriebsgassystem (1a, 1b) für ein Unterwasserfahrzeug, insbesondere für ein U-Boot oder ein unbemanntes Unterwasserfahrzeug, umfassend eine Brennstoffzellenanlage (3) und einen mit der Brennstoffzellenanlage (3) strömungstechnisch verbundenen Betriebsgasbehälter (5). Im Hinblick auf eine einfache und effiziente Speicherung von Boil-Off-Gasen (BO) ist zudem eine Gasaufnahmevorrichtung (7) vorgesehen, die mit dem Betriebsgasbehälter verbunden ist. Die Gasaufnahmevorrichtung (7) enthält ein Sorbtionsmittel (9, 19) zur Aufnahme von Boil-Off-Gas (BO) aus dem Betriebsgasbehälter (5). Somit wird das Boil-Off-Gas (BO), welches im Betriebsbehälter (5) mit dem Betriebsgas (BG) für die Brennstoffzellenanlage entsteht, und welches nicht unmittelbar in der Brennstoffzellenreaktion verbraucht werden kann, aufgesammelt und mit Hilfe des Sorptionsmittels (9, 19) in der Gasaufnahmevorrichtung (7) gespeichert.

## Beschreibung

Die Erfindung betrifft ein Betriebsgassystem für ein Unterwasserfahrzeug, insbesondere für ein U-Boot oder ein unbemanntes Unterwasserfahrzeug. Die Erfindung betrifft weiterhin ein Verfahren zum Betrieb eines solchen Betriebsgassystems sowie ein Unterwasserfahrzeug mit einem solchen Betriebsgassystem.

Unterwasserfahrzeuge, wie z.B. U-Boote, sind unter anderem mit Brennstoffzellenanlagen ausgestattet, durch welche Energie für den Betrieb des Fahrzeugs erzeugt wird. Die Brennstoffzellenanlage wird mit reinem Wasserstoff und Sauerstoff oder mit wasserstoff- bzw. sauerstoffhaltigen Gasen versorgt. Es gibt mehrere Möglichkeiten die Betriebsgase Wasserstoff und Sauerstoff zu speichern, z.B. in Form von verflüssigten Gasen in Kryotanks, in Form von komprimierten Gasen in Druckbehältern oder ad-/absorbiert auf/in einem Trägermaterial, wie z.B. in einem Metallhydridspeicher.

Wird ein Gas in flüssiger Form gespeichert, verdampft immer eine kleine Menge des flüssigen Gases, ein sogenanntes Boil-Off-Gas, da sich die Wärmezufuhr nicht permanent unterdrücken lässt. Solange man das verdampfte Gas an die umgebende Atmosphäre entsorgen kann, entsteht daraus kein Problem. Problematisch ist jedoch die Situation, wenn die Verdampfung innerhalb eines geschlossenen Systems, wie z.B. eines Unterwasserfahrzeugs, stattfindet, welches keinen Austausch mit der Atmosphäre zulässt. In diesem Fall müssen die Boil-Off-Gase im Inneren des Fahrzeugs aufgenommen und gelagert werden, sofern kein im Inneren des Fahrzeugs verfügbarer Prozess zum chemischen Aufbau der Gase (z.B. durch einen Umsatz in einer Brennstoffzellenreaktion oder bei Verbrennung) eingesetzt werden kann.

Zum Speichern der Boil-Off-Gase werden in der Regel Druckbehälter eingesetzt, in welche das freigesetzte Gas hineinströmt. Die Kapazität bzw. der maximal erzielbare Druck eines solchen Druckbehälters wird durch den Auslegungsdruck des Behälters bestimmt. Alternativ lässt man die beiden Betriebsgase Wasserstoff und Sauerstoff in kontrollierten Reaktionen (Verbrennung) abreagieren und erzeugt dabei das einfacher handhabbare Wasser als Produkt.

Der Erfindung liegt die Aufgabe zugrunde, eine einfache und effiziente Speicherung von Boil-Off-Gasen in einem Unterwasserfahrzeug zu ermöglichen.

Die Aufgabe wird erfindungsgemäß gelöst durch ein Betriebsgassystem für ein Unterwasserfahrzeug, insbesondere für ein U-Boot oder ein unbemanntes Unterwasserfahrzeug, umfassend eine Brennstoffzellenanlage, einen Betriebsgasbehälter, der mit der Brennstoffzellenanlage strömungstechnisch verbundenen ist, sowie eine Gasaufnahmevorrichtung, die ein Sorbtionsmittel zur Aufnahme von Boil-Off-Gas aus dem Betriebsgasbehälter enthält, wobei die Gasaufnahmevorrichtung dem Betriebsgasbehälter verbunden ist.

Die Aufgabe wird weiterhin erfindungsgemäß gelöst durch ein Verfahren zum Betrieb eines Betriebsgassystems für ein Unterwasserfahrzeug, insbesondere für ein U-Boot oder ein unbemanntes Unterwasserfahrzeug, wobei das Unterwasserfahrzeug eine Brennstoffzellenanlage zur Erzeugung von Energie aufweist, wobei ein Betriebsgas für die Brennstoffzellenanlage in einem Betriebsgasbehälter gespeichert ist und wobei Boil-Off-Gas aus dem Betriebsgasbehälter in eine ein Sorbtionsmittel enthaltende Gasaufnahmevorrichtung eingeleitet wird.

Die Aufgabe wird zudem erfindungsgemäß gelöst durch ein Unterwasserfahrzeug, insbesondere ein U-Boot oder ein unbemanntes Unterwasserfahrzeug, mit einem solchen Betriebsgassystem.

Die in Bezug auf das Betriebsgassystem nachstehend angeführten Vorteile und bevorzugten Ausgestaltungen lassen sich sinngemäß auf das Verfahren sowie das Unterwasserfahrzeug übertragen.

Die Erfindung beruht auf der Idee, dass ein Boil-Off-Gas, welches im Betriebsbehälter mit dem Betriebsgas entsteht und welches nicht unmittelbar in der Brennstoffzellenreaktion verbraucht werden kann, aufzusammeln und mit Hilfe des Sorptionsmittels in einer Gasaufnahmevorrichtung zu speichern. Hierbei stellen sowohl der Betriebsgasbehälter als auch die Gasaufnahmevorrichtung Gasspeicher dar, die sich bezüglich Aufbau, Funktionalität und Kapazität voneinander unterscheiden und im Hinblick auf ihre Verwendung optimiert sind.

Je nach Art des Sorptionsmittels kann es das Boil-Off-Gas entweder adsorbieren oder absorbieren. Durch den Einsatz von Ad-/Absorbern besteht somit die Möglichkeit eine große Menge an Boil-Off-Gas reversibel zu speichern. Das Boil-Off-Gas wird vom Sorptionsmittel aufgenommen und unter geeigneten physikalischen Bedingungen (Druck, Temperatur) im Betriebssystem wird das Boil-Off-Gas wieder freigesetzt und steht dann zu einer weiteren Verwertung im Inneren des Unterwasserfahrzeugs zur Verfügung. Im Vergleich zu einem herkömmlichen Druckspeicher lässt sich auf diese Weise eine größere Menge an Boil-Off-Gas speichern, was eine optimale Ausnutzung der im Unterwasserfahrzeug mitgeführten Betriebsgase ermöglicht.

Die Gasaufnahmevorrichtung mit dem Sorptionsmittel ist derart angeordnet, dass eine strömungstechnische Verbindung zum Betriebsgasbehälter auf der anderen Seite sowie zur Brennstoffzellenanlage auf der anderen Seite, existiert. Am Einfachsten lässt sich eine solche strömungstechnische Verbindung herstellen, indem von einer Hauptleitung, die den Betriebsgasbehälter mit der Brennstoffzellenanlage verbindet, eine Nebenleitung abgezeigt ist, so dass das Boil-Off-Gas zunächst in die Hauptleitung strömt und anschließend in die Nebenleitung eingeleitet wird. Der Betriebsgasbehälter und die Gasaufnahmevorrichtung sind somit sozusagen parallel zur Brennstoffzellenanlage geschaltet, so dass von beiden Gasspeichern unabhängig voneinander eine Gaszufuhr zur Brennstoffzellenanlage erfolgen kann. Der Vorgang ist zusätzlich vereinfacht, wenn der Betriebsgasbehälter und die Gasaufnahmevorrichtung z.B. über eine gemeinsame Druckregelung verfügen.

Alternativ ist jedoch auch möglich, dass die Gasaufnahmevorrichtung über die Nebenleitung direkt an den Betriebsgasbehälter gekoppelt ist, und dass eine separate Leitung von der Gasaufnahmevorrichtung in die Brennstoffzellenanlage oder in die Betriebsgas-Hauptleitung mündet.

Gemäß einer dritten Alternative sind die Brennstoffzelle, der Betriebsgasbehälter und die Gasaufnahmevorrichtung in Reihe an der Hauptleitung hintereinander geschaltet.

Gemäß einer bevorzugten Ausgestaltung weist die Brennstoffzellenanlage ein Kühlsystem auf, wobei eine Kühlmittelleitung des Kühlsystems zur Gasaufnahmevorrichtung führt. Im Kühlsystem zirkuliert ein Kühlmittel zum Kühlen der Brennstoffzellenanlage bei ihrem Betrieb. Durch die Kühlmittelleistung wird dabei gewährleistet, dass die Gasaufnahmevorrichtung mit dem Kühlmittel der Brennstoffzellenanlage gekühlt wird. Diese Lösung ist besonders platzsparend, da kein zweites Kühlsystem zur Temperaturregelung der Gasaufnahmevorrichtung erforderlich ist.

Gemäß einer weiteren bevorzugten Ausgestaltung sind die Brennstoffzellenanlage und die Gasaufnahmevorrichtung an der Kühlmittelleitung hintereinander in Reihe angeordnet, so dass das Kühlmittel zunächst in die Brennstoffzellenanlage und anschließend in die Gasaufnahmevorrichtung eingeleitet wird. Eine derartige Reihenschaltung der Brennstoffzellenanlage und der Gasaufnahmevorrichtung hat den großen Vorteil, dass, wenn die Brennstoffzellenanlage abgeschaltet ist, keine oder nur geringfügige Menge an Abwärme freigesetzt wird, die vom Kühlmittel abtransportiert werden muss, so dass das Kühlmittel praktisch nur zur Kühlung des Sorptionsmittels in der Gasaufnahmevorrichtung eingesetzt wird. Auf der anderen Seite im Betrieb der Brennstoffzellenanlage wird mit Hilfe des Kühlmittels zunächst die Abwärme aus der Brennstoffzellenanlage abgeführt und erst dann wird das erwärmte Kühlmittel zu dem Sorptionsmittel geleitet. Dadurch wird die Freisetzung des aufgenommenen Betriebsgases in der Gasaufnahmevorrichtung begünstigt, so dass das Boil-Off-Gas in der Brennstoffzellenanlage umgesetzt wird.

Vorzugsweise ist ein Druckregler zur Regulierung des Drucks in der Gasaufnahmevorrichtung vorgesehen. Dadurch werden die Aufnahme sowie die Freisetzung des Boil-Off-Gases vom Sorptionsmittel druckgeregelt. In der Ad-/Absorptionsphase wird der Druck erhöht, so dass mehr Boil-Off-Gas auf der Oberfläche des Sorptionsmittels fixiert wird. Zur Desorption wird der Druck herabgesetzt, insbesondere wird ein Druckgefälle zwischen der Brennstoffzellenanlage und der Gasaufnahmevorrichtung eingestellt, so dass das Gas aus der Gasaufnahmevorrichtung in die Brennstoffzellenanlage eingeleitet wird. Damit wird das Sorptionsmittel wieder regeneriert und steht für eine neue Beladephase zur Verfügung.

Alternativ oder in Kombination mit einer Druckregelung ist vorteilhafterweise ein Temperaturregler zur Regulierung der Temperatur in der Gasaufnahmevorrichtung vorgesehen. Hierbei werden die Aufnahme und die Freisetzung des Boil-Off-Gases vom Sorptionsmittel temperaturgeregelt. Ein Temperaturregler im Sinne der Erfindung ist z.B. das Kühlsystem, bei welchem Kühlmittel zur Gasaufnahmevorrichtung geführt wird.

Bevorzugt ist das Sorptionsmittel zur Adsorption des Boil-Off-Gases vorgesehen, insbesondere ist das Sorptionsmittel ein Molekularsieb. Molekularsiebe sind natürliche oder synthetische Zeolithe, die ein starkes Adsorptionsvermögen für Gase mit bestimmten Molekülgrößen haben. Molekularsiebe eignen sich sowohl für die Adsorption von Sauerstoff als auch von Wasserstoff.

Gemäß einer alternativen, bevorzugten Variante ist das Sorptionsmittel zur Absorption des Boil-Off-Gases vorgesehen, insbesondere ist das Sorptionsmittel ein Metallhydrid. Metallhydride sind insbesondere für die Aufnahme von Wasserstoff geeignet. Der Einsatz von Metallhydriden in U-Booten ist längst bekannt. Jedoch wurden Hydridspeicher bisher als alleinige Wasserstoffspeicher eingesetzt und nicht in Kombination mit einem anderen Haupt-Gasspeicher, so dass dem Hydridspeicher lediglich das Boil-Off-Gas aus dem Haupt-Gasspeicher zugeführt wird. Da ein Hydridspeicher relativ teuer ist, ergibt sich durch die Kombination aus dem konventionellen Haupt-Gasspeicher und einem Hydridspeicher nur für das Boil-Off-Gas der Vorteil, dass nur geringe Mengen an Metallhydrid erforderlich sind, so dass die Kosten für das oben beschriebene Betriebsgassystem möglichst gering bleiben.

Vorteilhafterweise wird Boil-Off-Gas aus der dem Betriebsgasbehälter beim Stillstand der Brennstoffzellenanlage in die Gasaufnahmevorrichtung eingeleitet. Im Betrieb der Brennstoffzellenanlage wird das Boil-Off-Gas insbesondere unmittelbar nach seiner Freisetzung mit dem Betriebsgas der Brennstoffzellenanlage zugeführt. Wenn jedoch Boil-Off-Gas entsteht und die Brennstoffzellenanlage nicht im Betrieb ist, wird dieses zunächst in der Gasaufnahmevorrichtung gespeichert.

Ein Ausführungsbeispiel der Erfindung wird anhand einer Zeichnung näher erläutert. Hierin zeigen schematisch und stark vereinfacht:
- FIG 1: eine erste Ausführung eines Betriebsgassystems für ein Unterwasserfahrzeug,
- FIG 2: eine zweite Ausführung eines Betriebsgassystems für ein Unterwasserfahrzeug,
- FIG 3: eine dritte Ausführung eines Betriebsgassystems für ein Unterwasserfahrzeug, und
- FIG 4: eine vierte Ausführung eines Betriebsgassystems für ein Unterwasserfahrzeug.

Gleiche Bezugszeichen haben in den verschiedenen Figuren die gleiche Bedeutung.

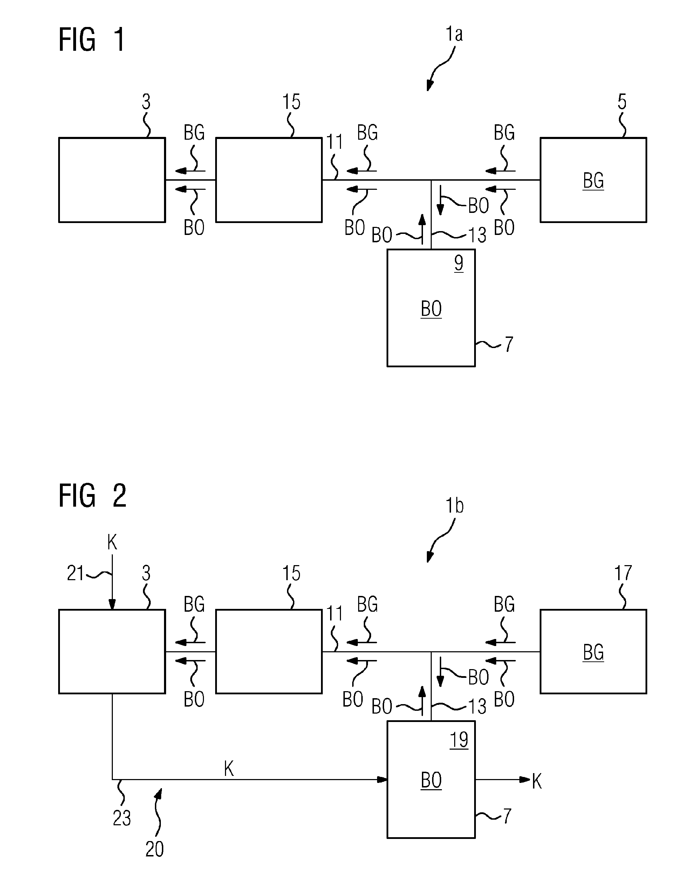

Das in FIG 1 gezeigte Betriebsgassystem 1a umfasst eine Brennstoffzellenanlage 3, in welcher Wasserstoff und Sauerstoff verbrannt werden und dadurch elektrischer Strom erzeugt wird, einen Betriebsgasbehälter 5 sowie eine Gasaufnahmevorrichtung 7. Das Betriebsgassystem 1a ist Teil eines hier nicht näher gezeigten Unterwasserfahrzeugs, welches z.B. ein U-Boot oder ein unbemanntes Unterwasserfahrzeug (UUV) sein kann. Das in FIG 1 gezeigte Betriebsgassystem 1a veranschaulicht lediglich die Speicherung und die Zufuhr eines der beiden Betriebsgase BG Wasserstoff oder Sauerstoff zur Brennstoffzellenanlage 3. Für das zweite Betriebsgas BG kann die gleiche oder eine ähnliche Anordnung von einem Betriebsgasbehälter 5 und einer Gasaufnahmevorrichtung 7 vorgesehen sein.

Der Betriebsgasbehälter 5 ist in diesem Ausführungsbeispiel nach Art eines Kryotanks ausgebildet. Der Kryotank 5 bildet dabei sozusagen den Haupt-Gasspeicher im System. Im Kryotank 5 wird eines der Betriebsgase BG in flüssiger Form unter sehr niedriger Temperatur gelagert. Obwohl das Betriebsgas BG größtenteils flüssig ist, verdampfen kleine Mengen davon und ein so genanntes Boil-Off-Gas BO entsteht. Je nach Menge des Boil-Off-Gases BO kann dieses nicht immer im Kryotank 5 gehalten werden, wenn die Brennstoffzellenanlage 3 jedoch nicht im Betrieb ist, kann das Boil-Off-Gas BO nicht unmittelbar nach seinem Freisetzen in der Brennstoffzellenanlage 3 abreagieren. Um dieses Boil-Off-Gas BO zwischenzuspeichern, ist daher die Gasaufnahmevorrichtung 7 vorgesehen. Die Gasaufnahmevorrichtung 7 enthält dabei ein Adsorptionsmittel 9, im gezeigten Ausführungsbeispiel ein Molekularsieb nach Art eines Zeoliths.

Die Brennstoffzelle 3 ist über eine Hauptleitung 11 mit dem Kryotank 5 verbunden, so dass das Betriebsgas BG aus dem Kryotank 5 direkt in die Brennstoffzellenanlage 3 eingeleitet werden kann. Von der Hauptleitung 11 ist eine Nebenleitung 13 abgezweigt, die in die Gasaufnahmevorrichtung 7 mit dem Molekularsieb 9 mündet. Somit kann Boil-Off-Gas BO aus dem Kryotank 5 zunächst in die Hauptleitung 11 und anschließend in die Nebenleitung 13 zum Molekularsieb 9 strömen, zudem kann das vom Molekularsieb 9 freigesetzte Boil-Off-Gas BO über die Nebenleitung 13 und anschließend über die Hauptleitung 11 der Brennstoffzellenanlage 3 zugeführt werden. Durch ein entsprechendes, hier nicht näher gezeigtes Armaturensystem werden die verschiedenen Leitungen 11, 13 bzw. Bereiche dieser Leitungen geöffnet bzw. gesperrt.

Wenn die Brennstoffzellenanlage 3 heruntergefahren ist, wird das Boil-Off-Gas BO aus dem Kryotank 5 zunächst in die mit dem Molekularsieb 9 befüllten Gasaufnahmevorrichtung 7 eingeleitet. Das Boil-Off-Gas BO adsorbiert auf dem Molekularsieb 9 bis hin zu einem Gleichgewicht, welches von der Adsorptionsmittelkapazität, Druck und Temperatur in der Gasaufnahmevorrichtung 7 abhängig ist. Wenn das Boil-Off-Gas BO für die Reaktion in der Brennstoffzellenanordnung 3 benötigt ist, wird über einen Druckregler 15 der Druck in der Hauptleitung 11 herabgesetzt. Durch das entstehende Druckgefälle wird das Boil-Off-Gas BO desorbiert und in die Brennstoffzellenanlage 3 hineingeleitet. Die Beladungsmenge an Boil-Off-Gas BO in der Gasaufnahmevorrichtung 7 wird durch die Menge an verfügbarem Molekularsieb 9 bestimmt.

Beim Ausführungsbeispiel gemäß FIG 2 wird ein Druckbehälter 17 anstelle eines Kryotanks 5 verwendet. Zudem ist die Gasaufnahmevorrichtung 7 mit einem Hydridspeicher, insbesondere ein Metallhydrid, befüllt. Ein derartiger Hydridspeicher 19 eignet sich insbesondere für die Absorption von Wasserstoff.

Der wesentliche Unterschied im Vergleich zur Ausführung gemäß FIG 1 ist, dass in FIG 2 die Temperaturregelung des Hydridspeichers 19 in der Gasaufnahmevorrichtung 7 mit Hilfe eines Kühlmittels K für die Brennstoffzellenanlage 3 erfolgt. Zusätzlich zur Druckregelung über den Druckregler 15 kann in FIG 1 eine Temperaturregelung in der Gasaufnahmevorrichtung 7 zur Aufnahme und zur Freisetzung des Boil-Off-Gases BO durch das Hydridspeicher 19 erfolgen.

Hierfür wird in einem ersten Schritt das Kühlmittel K, insbesondere kaltes Wasser, über eine Zufuhrleitung 23 in die Brennstoffzellenanlage 3 eingeleitet. Über eine Kühlmittelleitung 23 wird das Kühlmittel K anschließend der Gasaufnahmevorrichtung 7 zugeführt. Wenn in einer Brennstoffzelle kein Umsatz stattfindet, staut sich unverbrauchtes Boil-Off-Gas BO auf. Infolge des gestoppten Umsatzes in der Brennstoffzelle wird dort auch keine Wärme mehr freigesetzt. Das Kühlsystem 20 der Brennstoffzellenanlage 3 muss daher keine Wärme mehr aus der Brennstoffzelle abführen. Das kalte Kühlmittel K wird nun durch in Reihe mit der Brennstoffzellenanlage 3 geschalteten Hydridspeicher 19 geleitet, um die dort bei der Aufnahme von Wasserstoff in den Hydridspeicher 19 freiwerdende Absorptionswärme abzuführen.

Sobald sich der Bedarf an Wasserstoff in der Brennstoffzellenanlage 3 wieder erhöht, z.B. indem die Brennstoffzellenreaktion wieder hochgefahren wird, wird dem Kühlmittel K auch wieder Wärme aus dem Brennstoffzellenprozess zugeführt. Diese Wärme wird anschließend in die Gasaufnahmevorrichtung 7 eingeleitet und dem Hydridspeicher 19 abgegeben. Damit wird die Freisetzung des absorbierten Wasserstoffs aktiviert, welcher Wasserstoff sich wiederum in der Brennstoffzellenanlage 3 umsetzen lässt.

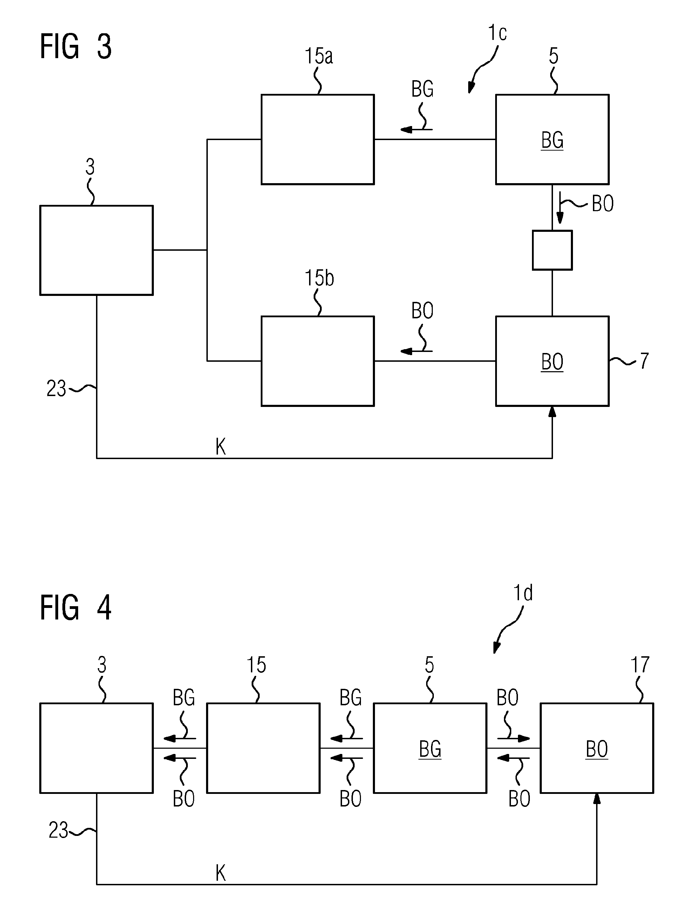

Bei dem Betriebsgassystem 1c in FIG 3 strömt das Boil-Off-Gas BO größtenteils in einer separaten Leitung. Es münden hierbei zwei unabhängige Leitungen mit einem jeweiligen Druckregler 15a, 15b an der Brennstoffzellenanlage 3, die sich unabhängig voneinander abrufen lassen. Zwischen dem Betriebsgasbehälter 5 und der Gasaufnahmevorrichtung 7 ist dabei ein Rückschlagventil 25 angeordnet, so dass im offenen Zustand des Rückschlagventils 25 Boil-Off-Gas BO aus dem Betriebsgasbehälter 5 in die Gasaufnahmevorrichtung 7 hineinströmt.

In FIG 4 ist eine vierte Anordnung der Komponenten des Betriebsgassystem 1d gezeigt. Der Betriebsgasbehälter 5 und die Gasaufnahmevorrichtung 7 sind in einer Reihe bezüglich der Brennstoffzellenanlage 3 angeordnet und verfügen über einen gemeinsamen Druckregler 15.

Sowohl in FIG 3 als auch in FIG 4 ist mit gepunkteter Linie die Kühlmittelleitung 23 angedeutet, welche optional zur Gasaufnahmevorrichtung 7, um das dort befindliche Sorbtionsmittel (9, 19) thermisch zu beeinflussen.

Die in FIG 1 und FIG 2 beschriebenen Betriebsgassysteme 1a, 1b, 1c, 1d sind insbesondere für den Einsatz in Unterwasserfahrzeugen geeignet. Durch die Betriebsgassysteme 1a, 1b lässt sich eine unerwünschte Freisetzung des überschüssigen Boil-Off-Gases BO vermeiden. Dafür liefern die Betriebsgassysteme 1a, 1b neben einer besseren Verwertung der Betriebsgase BG auch einen Beitrag zur Verlängerung des Zeitraums, in dem die Boil-Off-Gase BO nicht ausgeblasen werden.

## Patentansprüche

1. Betriebsgassystem (1a, 1b) für ein Unterwasserfahrzeug, insbesondere für ein U-Boot oder ein unbemanntes Unterwasserfahrzeug, umfassend eine Brennstoffzellenanlage (3), einen Betriebsgasbehälter (5), der mit der Brennstoffzellenanlage (3) strömungstechnisch verbunden ist, sowie eine Gasaufnahmevorrichtung (7), die ein Sorbtionsmittel (9, 19) zur Aufnahme von Boil-Off-Gas (BO) aus dem Betriebsgasbehälter (5) enthält, wobei die Gasaufnahmevorrichtung (7) mit dem Betriebsgasbehälter (5) verbunden ist.

2. Betriebsgassystem (1a, 1b) nach Anspruch 1,
wobei die Brennstoffzellenanlage (3) ein Kühlsystem (20) aufweist, wobei eine Kühlmittelleitung (23) des Kühlsystems (20) zur Gasaufnahmevorrichtung (7) führt.

3. Betriebsgassystem (1a, 1b) nach Anspruch 2,
wobei die Brennstoffzellenanlage (3) und die Gasaufnahmevorrichtung (7) an der Kühlmittelleitung (23) hintereinander in Reihe angeordnet sind.

4. Betriebsgassystem (1a, 1b) nach einem der vorhergehenden Ansprüche,
wobei ein Druckregler (15) zur Regulierung des Drucks in der Gasaufnahmevorrichtung (7) vorgesehen ist.

5. Betriebsgassystem (1a, 1b) nach einem der vorhergehenden Ansprüche,
wobei ein Temperaturregler zur Regulierung der Temperatur in der Gasaufnahmevorrichtung (7) vorgesehen ist.

6. Betriebsgassystem (1a, 1b) nach einem der vorhergehenden Ansprüche,
wobei das Sorbtionsmittel (9) zur Adsorption des Boil-Off-Gases (BO) vorgesehen ist, insbesondere ist das Sorbtionsmittel (9) ein Molekularsieb.

7. Betriebsgassystem (1a, 1b) nach einem der vorhergehenden Ansprüche,
wobei das Sorbtionsmittel (19) zur Absorption des Boil-Off-Gases (BO) vorgesehen ist, insbesondere ist das Sorbtionsmittel (19) ein Hydridspeicher.

8. Verfahren zum Betrieb eines Betriebsgassystems (1a, 1b) für ein Unterwasserfahrzeug, insbesondere für ein U-Boot oder ein unbemanntes Unterwasserfahrzeug, wobei das Unterwasserfahrzeug eine Brennstoffzellenanlage (3) zur Erzeugung von Energie aufweist, wobei ein Betriebsgas (BG) für die Brennstoffzellenanlage (3) in einem Betriebsgasbehälter (5) gespeichert ist und wobei Boil-Off-Gas (BO) aus dem Betriebsgasbehälter (5) in eine ein Sorbtionsmittel (9, 19) enthaltende Gasaufnahmevorrichtung (7) eingeleitet wird.

9. Verfahren nach Anspruch 8,
wobei die Gasaufnahmevorrichtung (7) mit einem Kühlmittel (K) der Brennstoffzellenanlage (3) gekühlt wird.

10. Verfahren nach Anspruch 9,
wobei das Kühlmittel (K) zunächst in die Brennstoffzellenanlage (3) und anschließend in die Gasaufnahmevorrichtung (7) eingeleitet wird.

11. Verfahren nach einem der Ansprüche 8 bis 10,
wobei die Aufnahme und Freisetzung des Boil-Off-Gases (BO) vom Sorptionsmittel (9, 19) druckgeregelt wird.

12. Verfahren nach einem der Ansprüche 8 bis 11,
wobei die Aufnahme und Freisetzung des Boil-Off-Gases (BO) vom Sorptionsmittel (9, 19) temperaturgeregelt wird.

13. Verfahren nach einem der Ansprüche 8 bis 12,
wobei das Boil-Off-Gas (BO) vom Sorbtionsmittel (9), welches insbesondere ein Molekularsieb ist, adsorbiert wird.

14. Verfahren nach einem der Ansprüche 8 bis 13,
wobei das Boil-Off-Gas (BO) vom Sorbtionsmittel (19), welches insbesondere ein Hydridspeicher ist, absorbiert wird.

15. Verfahren nach einem der Ansprüche 8 bis 14,
wobei Boil-Off-Gas (BO) aus der dem Betriebsgasbehälter (5) beim Stillstand der Brennstoffzellenanlage (3) in die Gasaufnahmevorrichtung (7) eingeleitet wird.

16. Unterwasserfahrzeug, insbesondere ein U-Boot oder ein unbemanntes Unterwasserfahrzeug, mit einem Betriebsgassystem (1a, 1b) nach einem der Ansprüche 1 bis 7.
